# EUROPÄISCHE PATENTANMELDUNG

(11) **EP 4 299 963 A1**
(43) Veröffentlichungstag der Anmeldung: **03.01.2024**
(21) Anmeldenummer: 23182263.6
(22) Anmeldetag: 29.06.2023
(51) Int. Cl.: F16L 37/086, F16L 37/42

(54) **KUPPLUNGSELEMENT FÜR EINE FLUIDKUPPLUNG SOWIE ENTSPRECHENDE FLUIDKUPPLUNG**

(30) Priorität: 29.06.2022 DE 102022206570
(71) Anmelder: Karasto Armaturenfabrik Oehler GmbH, 71522 Backnang (DE)
(72) Erfinder: RÖDLING, David, 71522 Backnang (DE); BUJARA, Thomas, 74248 Ellhofen (DE)
(74) Vertreter: Dietz, Christopher Friedrich

(57) **Zusammenfassung**

Die Erfindung betrifft ein Kupplungselement (2) für eine Fluidkupplung (1), mit Kopplungsmitteln (6) zum reversiblen Koppeln des Kupplungselements (2) mit einem Kupplungsgegenelement (3) der Fluidkupplung (1), wobei in einem Kupplungskörper (5) des Kupplungselements (2) eine Steckaufnahme (4) ausgestaltet ist, in die das als Steckverbinder ausgestaltete Kupplungsgegenelement (3) zur Herstellung einer Fluidverbindung einsteckbar ist, wobei die Kopplungsmittel (6) wenigstens ein Rastelement (8) umfassen, das in einer ersten Stellung zum Hintergreifen eines Rastbunds (9) des Kupplungsgegenelements (3) in die Steckaufnahme (4) hineinragt und in einer zweiten Stellung zum Freigeben des Rastbunds (9) angeordnet ist. Dabei ist vorgesehen, dass eine Schiebehülse (17) in axialer Richtung bezüglich einer Längsmittelachse (16) der Steckaufnahme (4) verlagerbar an dem Kupplungskörper (5) gelagert ist, die dazu vorgesehen und ausgestaltet ist, bei einer axialen Verlagerung das wenigstens eine Rastelement (8) in Richtung seiner zweiten Stellung zu drängen, wobei das wenigstens eine Rastelement (8) in seiner ersten Stellung in radialer Richtung nach innen über die Schiebehülse (17) übersteht. Die Erfindung betrifft weiterhin eine Fluidkupplung (1).

## Beschreibung

Die Erfindung betrifft ein Kupplungselement für eine Fluidkupplung, mit Kopplungsmitteln zum reversiblen Koppeln des Kupplungselements mit einem Kupplungsgegenelement der Fluidkupplung, wobei in einem Kupplungskörper des Kupplungselements eine Steckaufnahme ausgestaltet ist, in die das als Steckverbinder ausgestaltete Kupplungsgegenelement zur Herstellung einer Fluidverbindung einsteckbar ist, wobei die Kopplungsmittel wenigstens ein Rastelement umfassen, das in einer ersten Stellung zum Hintergreifen eines Rastbunds des Kupplungsgegenelements in die Steckaufnahme hineinragt und in einer zweiten Stellung zum Freigeben des Rastbunds angeordnet ist.

Aus dem Stand der Technik ist beispielsweise die Druckschrift DE 36 34 338 C2 bekannt. Diese beschreibt eine Schnellkupplung für einen Rohrstutzen, der an seiner Außenwand mindestens eine Aus- und/oder Einformung aufweist, mit einer den Stutzen innenseitig aufnehmenden Büchse, in welcher mindestens ein durch ein Federelement gegen die Büchsenachse gedrücktes Rastelement gelagert und zu Entriegelung gegen die Federkraft in mindestens einer Bewegungskomponente radial nach außen schiebbar ist, wobei das Rastelement im Büchseninneren mindestens eine Teilfläche aufweist, welche mit einer rohrförmigen Entriegelungshülse zusammenwirkt, die in einem zwischen der Büchseninnenwand und dem Stutzen gebildeten axialen Freiraum verschiebbar ist und durch axiales Einschieben auf der Keilfläche des Rastelements gleitet und dieses nach außen drückt, und mit einer Arretierungseinrichtung zwischen der Büchse und der Entriegelungshülse. Dabei ist vorgesehen, dass die Arretierungseinrichtung als Kugelflächen/Einformungs-Verriegelung ausgebildet ist.

Weiterhin beschreibt die Druckschrift DE 10 2006 002 565 A1 ein Kupplungsteil für eine Steckverbindungsanordnung, wobei das Kupplungsteil einen Kupplungskörper aufweist mit einer Aufnahme, in die ein Steckteil zum Herstellen einer fluiddichten Verbindung in Richtung einer Längsachse der Aufnahme einsteckbar ist, und wobei das Kupplungsteil zwei zueinander beabstandet Verriegelungselemente aufweist, die in einer Verriegelungsstellung aneinander gegenüberliegend seitlich in die Aufnahme eintauchen zum Hintergreifen des Steckteils und die zum Lösen des Steckteils in eine Freigabestellung bewegbar sind. Es ist vorgesehen, dass das Kupplungsteil ein relativ zum Kupplungskörper bewegbares Betätigungselement aufweist, wobei die Verriegelungselemente durch Bewegen des Betätigungselements aus der Verriegelungsstellung in die Freigabestellung bewegbar sind, in der sie einen größeren Abstand zueinander aufweisen als in der Verriegelungsstellung.

Es ist Aufgabe der Erfindung, ein Kupplungselement für eine Fluidkupplung vorzuschlagen, welches gegenüber bekannten Kupplungselementen Vorteile aufweist, insbesondere ein zuverlässiges Halten des Kupplungsgegenelements in der Steckaufnahme bei gleichzeitig hohem Bedienkomfort sicherzustellen.

Dies wird erfindungsgemäß mit einem Kupplungselement für eine Fluidkupplung mit den Merkmalen des Anspruchs 1 erreicht. Dabei ist vorgesehen, dass eine Schiebehülse in axialer Richtung bezüglich einer Längsmittelachse der Steckaufnahme verlagerbar an dem Kupplungskörper gelagert ist, die dazu vorgesehen und ausgestaltet ist, bei einer axialen Verlagerung das wenigstens eine Rastelement in Richtung seiner zweiten Stellung zu drängen, wobei das wenigstens eine Rastelement in seiner ersten Stellung in radialer Richtung nach innen über die Schiebehülse übersteht. Die Erfindung betrifft weiterhin eine Fluidkupplung.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Kupplungselement ist Bestandteil der Fluidkupplung, mittels welcher beispielsweise zwei Fluidleitungen, also eine erste Fluidleitung und eine zweite Fluidleitung, bevorzugt fluiddicht miteinander verbunden werden können. Die Fluidleitungen können dabei grundsätzlich beliebig ausgestaltet sein. Beispielsweise liegen eine oder mehrere der Fluidleitungen jeweils als Schlauchleitung vor. Auch eine Ausgestaltung einer oder mehrerer der Fluidleitungen jeweils als Rohrleitung kann vorgesehen sein. Die Rohrleitung zeichnet sich gegenüber der Schlauchleitung durch ihre starre Ausgestaltung aus, wohingegen die Schlauchleitung flexibel ist. Anders ausgedrückt ist die Schlauchleitung flexibler als die Rohrleitung.

Die Fluidkupplung verfügt zur Herstellung der fluidtechnischen Verbindung zwischen der ersten Fluidleitung und der zweiten Fluidleitung über das Kupplungselement und das Kupplungsgegenelement. Das Kupplungselement ist beispielsweise der ersten Fluidleitung zugeordnet und strömungstechnisch mit ihr verbindbar oder verbunden. Umgekehrt ist das Kupplungsgegenelement der zweiten Fluidleitung zugeordnet und strömungstechnisch mit ihr verbindbar oder verbunden. Die Verbindung zwischen der Fluidleitung und dem Kupplungselement beziehungsweise dem Kupplungsgegenelement kann grundsätzlich auf beliebige Art und Weise hergestellt werden, beispielsweise durch Verklemmen, Verschrauben, Verschweißen, Verlöten oder dergleichen. Insgesamt ist die Fluidverbindungen zwischen den beiden Fluidleitungen über die Fluidkupplung, genauer gesagt über das Kupplungselement und das Kupplungsgegenelement, hergestellt. Hierzu ist die erste Fluidleitung strömungstechnisch an das Kupplungselement und die zweite Fluidleitung an das Kupplungsgegenelement angeschlossen und das Kupplungselement sowie das Kupplungsgegenelement zur Herstellung der Fluidverbindungen miteinander verbunden.

Nach der Kopplung des Kupplungselements mit dem Kupplungsgegenelement ist insoweit die Fluidverbindungen zwischen den beiden Fluidleitungen über das Kupplungselement und das Kupplungsgegenelement hergestellt. Auch bei mit dem Kupplungsgegenelement gekoppeltem Kupplungselement sind vorzugsweise die erste Fluidleitung und die zweite Fluidleitung beabstandet voneinander angeordnet, sodass keine unmittelbare Verbindung, insbesondere keine unmittelbare Fluidverbindung, zwischen ihnen vorliegt. Vielmehr ist die Verbindung beziehungsweise Fluidverbindung ausschließlich über die Fluidkupplung und folglich über das Kupplungselement und das Kupplungsgegenelement hergestellt.

Das Kupplungselement verfügt über die Kopplungsmittel, die zur mechanischen Kopplung des Kupplungselements mit dem Kupplungsgegenelement vorgesehen und ausgestaltet sind. Beispielsweise wirken die Kopplungsmittel zum Befestigen des Kupplungselements und des Kupplungsgegenelements aneinander mit Kopplungsgegenmitteln des Kupplungsgegenelements zusammen beziehungsweise sind für ein solches Zusammenwirken vorgesehen und ausgestaltet. Die Kopplungsmittel umfassen erfindungsgemäß das wenigstens eine Rastelement; die Kopplungsgegenmittel weisen den Rastbund auf. Unter dem Rastbund ist ein Radialvorsprung des Kupplungsgegenelements zu verstehen, welcher bevorzugt in Umfangsrichtung durchgehend und ununterbrochen ausgestaltet ist. Beispielsweise liegt der Rastbunds als Rotationskörper an dem Kupplungsgegenelement vor.

Das wenigstens eine Rastelement ist in unterschiedlichen Stellungen anordenbar, nämlich zumindest in der ersten Stellung und der zweiten Stellung. In der ersten Stellung ist das wenigstens eine Rastelement zum Hintergreifen des Rastbunds angeordnet und ragt hierzu in die Steckaufnahme hinein, in welche das Kupplungsgegenelement seinerseits hineinragt. In der ersten Stellung ist also das wenigstens eine Rastelement in radialer Richtung gesehen in Überdeckung mit dem Rastbund angeordnet, um diesen zu hintergreifen. Durch das Hintergreifen des Rastbunds durch das wenigstens eine Rastelement, insbesondere in der Steckaufnahme, ist das Kupplungsgegenelement gegen ein Herausziehen aus der Steckaufnahme gesichert und insoweit in axialer Richtung festgesetzt. Die erste Stellung kann insoweit auch als Verriegelungsstellung bezeichnet werden.

In der zweiten Stellung hingegen gibt das wenigstens eine Rastelement den Rastbund frei, liegt also außer Eingriff mit diesem vor. Insbesondere ist das wenigstens eine Rastelement in seiner zweiten Stellung in radialer Richtung bezüglich der Längsmittelachse gesehen abseits des Rastbunds angeordnet, insbesondere in radialer Richtung weiter außen liegend als dieser. Soweit im Rahmen dieser Beschreibung von dem Rastelement oder dem wenigstens einen Rastelement gesprochen wird, so sind diese Formulierungen deckungsgleich. Unter dem Rastelement ist insoweit stets das wenigstens eine Rastelement zu verstehen und umgekehrt.

Die Verlagerung des Rastelements aus der ersten Stellung heraus in Richtung der zweiten Stellung beziehungsweise bis in die zweite Stellung hinein wird mithilfe der Schiebehülse erzielt. Die Schiebehülse greift insoweit zumindest zeitweise an dem Rastelement an, um dieses in Richtung der zweiten Stellung beziehungsweise in die zweite Stellung zu drängen. Hierzu ist die Schiebehülse in axialer Richtung verlagerbar an dem Kupplungskörper angeordnet beziehungsweise an ihm gelagert. Das bedeutet, dass die Schiebehülse unabhängig von dem Kupplungsgegenelement an dem Kupplungskörper angeordnet und bezüglich diesem verlagerbar ist. Vorzugsweise ist die Schiebehülse derart an dem Kupplungskörper gelagert, dass sie in Umfangsrichtung bezüglich diesem festgesetzt ist. Entsprechend liegt eine verdrehsichere Lagerung der Schiebehülse an dem Kupplungskörper vor. Dies wird durch eine formschlüssige Verbindung zwischen Schiebehülse und Kupplungskörper erzielt. Beispielsweise weist die Schiebehülse auf ihrer Innenseite eine oder mehrere Abflachungen auf, die an einer oder mehrerer Abflachungen des Kupplungskörpers anliegen. Die Abflachungen sind derart ausgestaltet, dass sie ein Verlagern der Schiebehülse bezüglich des Kupplungskörpers in axialer Richtung zulassen, in tangentialer Richtung beziehungsweise Umfangsrichtung jedoch unterbinden.

Insbesondere ist die Schiebehülse derart ausgestaltet, dass das Kupplungsgegenelement durch die Schiebehülse hindurch in die Steckaufnahme einbringbar ist. Dabei ist die Schiebehülse innenseitig größer als das Kupplungsgegenelement, insbesondere als der Rastbund, sodass das Kupplungsgegenelement beziehungsweise der Rastbund durch die Schiebehülse hindurch verlagerbar ist. Vorzugsweise ist die Schiebehülse mit Spiel zwischen zwei Endanschlägen bezüglich des Kupplungskörpers verlagerbar an diesem gelagert. Die Schiebehülse ist derart mit dem Kupplungskörper verbunden, dass sie auch bei abseits der Steckaufnahme angeordnetem Kupplungsgegenelement beziehungsweise Rastbund an dem Kupplungskörper gehalten ist, insbesondere in axialer Richtung innerhalb des Spiels.

Das Rastelement und die Schiebehülse sind grundsätzlich unabhängig voneinander verlagerbar, sodass eine Verlagerung des Rastelements keine Verlagerung der Schiebehülse zur Folge hat. In anderen Worten kann das Rastelement unabhängig von der Schiebehülse verlagert werden. Umgekehrt bewirkt die Verlagerung der Schiebehülse in axialer Richtung die Verlagerung des Rastelements in in Richtung seiner zweiten Stellung. Folglich wird eine Verlagerung der Schiebehülse durch ein Einbringen des Kupplungsgegenelements in die Steckaufnahme verhindert. Hierdurch wird ein hoher Bedienkomfort erzielt.

Selbstredend kann eine beliebige Anzahl an Rastelementen vorliegen. Das wenigstens eine Rastelement ist insoweit vorzugsweise Bestandteil mehrerer Rastelemente, welche jeweils analog zu dem Rastelement ausgestaltet sind. Die Rastelemente sind vorzugsweise in Umfangsrichtung bezüglich der Längsmittelachse versetzt an dem Kupplungselement beziehungsweise dem Kupplungskörper angeordnet, insbesondere gleichmäßig verteilt. In letzterem Fall sind die Rastelement in Umfangsrichtung äquidistant zueinander angeordnet. Sofern im Rahmen dieser Beschreibung auf das Rastelement beziehungsweise das wenigstens eine Rastelement eingegangen wird, so sind die Ausführungen stets - soweit technisch sinnvoll - auf jedes der mehreren Rastelemente übertragbar.

Die beschriebene Ausgestaltung des Kupplungselements hat den Vorteil, dass zum einen die Schiebehülse unverlierbar an dem Kupplungskörper gelagert ist. Es ist insoweit kein separater Mechanismus notwendig, um das Rastelement aus der ersten Stellung heraus in Richtung der zweiten Stellung zu drängen. Zum anderen bewirkt ein Verlagern des Rastelements, beispielsweise aufgrund des Einsteckens des Kupplungsgegenelements in die Rastaufnahme unter Auslenkung des Rastelements, keine Verlagerung der Schiebehülse. Beides bewirkt einen hohen Bedienkomfort des Kupplungselements.

Eine Weiterbildung der Erfindung sieht vor, dass das wenigstens eine Rastelement entlang einer gegenüber einer eine Längsmittelachse der Steckaufnahme aufnehmenden gedachten Ebene angewinkelten Verlagerungsachse zwischen der ersten Stellung der zweiten Stellung verlagerbar ist. Das Rastelement ist entlang der Verlagerungsachse verlagerbar gelagert, insbesondere an dem Kupplungskörper. Bei einer Verlagerung des Rastelements zwischen der ersten Stellung und der zweiten Stellung beziehungsweise umgekehrt bewegt sich das Rastelement insoweit entlang der Verlagerungsachse. Die Verlagerungsachse ist gegenüber der Längsmittelachse der Steckaufnahme beziehungsweise der gedachten Ebene angewinkelt. Die gedachte Ebene ist hierbei eine Ebene, welche die Längsmittelachse der Steckaufnahme vollständig in sich aufnimmt. Vorzugsweise schneidet die Verlagerungsachse die gedachte Ebene symmetrisch. Hierunter ist zu verstehen, dass in wenigstens einer Richtung zwischen der gedachten Ebene und der Verlagerungsachse identische Winkel vorliegen.

Die Verlagerungsachse ist bezüglich der Längsmittelachse beziehungsweise der gedachten Ebene angewinkelt. Das bedeutet, dass zwischen ihnen ein Winkel vorliegt, welcher größer als 0° und kleiner als 180° ist. Vorzugsweise beträgt der Winkel mindestens 10° oder mindestens 15°. Bevorzugt ist er jedoch größer und beträgt mindestens 20°, mindestens 25° oder mindestens 30°. Zusätzlich oder alternativ beträgt der Winkel weniger als 90°, insbesondere beträgt er höchstens 45°, höchstens 40° oder höchstens 35°. Der Winkel liegt insoweit beispielsweise zwischen 15° und 35°, zwischen 20° und 30° oder beträgt in etwa oder genau 25°, die genannten Werte jeweils eingeschlossen. Hierbei ist das Rastelement derart angeordnet, dass sein freies Ende in Richtung einer Mündungsöffnung weist, über welche die Steckaufnahme in eine Außenumgebung des Kupplungselements einmündet und durch welche das Kupplungsgegenelement in die Steckaufnahme einsteckbar ist.

Das Rastelement ist ist insbesondere derart angeordnet beziehungsweise angewinkelt, dass es bei dem Einstecken des Kupplungsgegenelements in die Steckaufnahme von dem Rastbunds aus seiner ersten Stellung in Richtung der zweiten Stellung, insbesondere bis in diese hinein gedrängt wird. Ist das Kupplungsgegenelement vollständig in die Steckaufnahme eingebracht, so wird das Rastelement wieder aus seiner zweiten Stellung in die erste Stellung verlagert, sodass es nachfolgend den Rastbunds zum Halten des Kupplungsgegenelements in der Steckaufnahme hintergreift. Hierdurch ist ein einfaches Herstellen der Fluidverbindungen sichergestellt.

Eine Weiterbildung der Erfindung sieht vor, dass das wenigstens eine Rastelement in Richtung seiner ersten Stellung mittels eines Federelements federkraftbeaufschlagt ist. Das Federelement greift an dem Rastelement an und drängt dieses in Richtung der ersten Stellung. Die erste Stellung des Rastelements stellt insoweit seine Ausgangsstellung dar, aus welcher es durch das Einstecken des Kupplungsgegenelements in die Steckaufnahme, insbesondere durch Zusammenwirken des Rastbunds mit dem Rastelement, und/oder mittels der Schiebehülse heraus in Richtung der zweiten Stellung verlagerbar ist. Das Federelement ist vorzugsweise als Spiralfeder ausgestaltet. In diesem Fall ist das Federelement bevorzugt derart angeordnet, dass seine Längsmittelachse mit der Verlagerungsachse zusammenfällt oder parallel zu ihr verläuft. Die Verwendung des Federelements stellt ein zuverlässiges Verrasten des Rastelements mit dem Rastbund sicher.

Eine Weiterbildung der Erfindung sieht vor, dass das wenigstens eine Rastelement auf seiner der Steckaufnahme abgewandten Seite einen Hintergriffsbund aufweist, der in der ersten Stellung an einem Rastelementendanschlag anliegt. Durch das Anliegen des Hintergriffsbunds an dem Rastelementendanschlag wird eine weitere Verlagerung des Rastelements in Richtung der Steckaufnahme verhindert. Anders ausgedrückt verhindern der Hintergriffsbund und der Rastelementendanschlag, insbesondere durch ihr Zusammenwirken beziehungsweise durch das Anliegen, dass das Rastelement über die erste Stellung hinaus verlagert wird, nämlich in die der zweiten Stellung abgewandte Richtung. Folglich ist das Rastelement verliersicher an dem Kupplungskörper gehalten und kann nicht unkontrolliert in die Steckaufnahme hinein gelangen.

Beispielsweise ist das Rastelement in einer Rastelementaufnahme in Richtung der Verlagerungsachse verlagerbar gelagert. In diesem Fall ist der Rastelementendanschlag insbesondere durch eine Stufung der Rastelementaufnahme gebildet. Bevorzugt ist die Rastelementaufnahme hierzu als Stufenbohrung ausgestaltet. Der Hintergriffsbund steht vorzugsweise in radialer Richtung bezüglich der Verlagerungsachse über einen Grundkörper des Rastelements über, insbesondere in Umfangsrichtung durchgehend und ununterbrochen. Hierdurch wird ein zuverlässiges Halten des Rastelements erzielt.

Eine Weiterbildung der Erfindung sieht vor, dass das wenigstens eine Rastelement hohl ist und das Federelement in das Rastelement eingreift und sich an einer Innenwand des wenigstens einen Rastelements abstützt. Bevorzugt stützt sich das Federelement zumindest in axialer Richtung bezüglich der Verlagerungsachse an der Innenwand ab. Besonders bevorzugt liegt es zusätzlich in radialer Richtung an der Innenwand an, stützt sich also in radialer Richtung nach außen bezogen auf die Verlagerungsachse an dieser ab. Dies ist insbesondere bei der Verwendung einer Spiralfeder als Federelement vorgesehen. Durch das Abstützen an der Innenwand kann ein Verkippen beziehungsweise Ausknicken des Federelements effektiv unterbunden werden. Das Eingreifen des Federelements in das Rastelement ermöglicht die Verwendung eines in axialer Richtung bezüglich der Verlagerungsachse größeren Federelements im Vergleich zu einer Ausgestaltung des Kupplungselements, bei welcher das Federelement außen an dem Rastelement angreift. Folglich wird durch das Eingreifen des Rastelements eine gleichmäßige Federkraft des Federelements erzielt.

Eine Weiterbildung der Erfindung sieht vor, dass das wenigstens eine Rastelement als Rasthülse ausgestaltet ist und einen kreiszylindrischen Basisabschnitt sowie einen teilkugelförmigen Endabschnitt aufweist. Das Rastelement ist also hohl, wie bereits erläutert. Es verfügt über den Basisabschnitt sowie den sich bevorzugt unmittelbar an den Basisabschnitt anschließenden Endabschnitt. Der Basisabschnitt liegt in Form eines Kreiszylinders vor, der Endabschnitt als Teilkugel. Genauer gesagt ist der Basisabschnitt hohlkreiszylindrisch und der Basisabschnitt hohlteilkugelförmig. Der Basisabschnitt geht stetig in den Endabschnitt über, sodass also der Endabschnitt auf seiner dem Basisabschnitt zugewandten Seite denselben Durchmesser aufweist wie der Basisabschnitt. Das Rastelement ist auf seiner dem Endabschnitt abgewandten Seite offen, weist dort also eine Öffnung auf. Vorzugsweise greift das Federelement durch diese Öffnung in das Rastelement ein und stützt sich an seiner Innenwand ab. Die Verwendung der Rasthülse als Rastelement ermöglicht zum einen eine zuverlässige Führung des Federelements und zum anderen ein zuverlässiges Halten des Kupplungsgegenelements in der Steckaufnahme.

Eine Weiterbildung der Erfindung sieht vor, dass sich das Federelement auf seiner dem wenigstens einen Rastelement abgewandten Seite an einem Stützring abstützt, der den Kupplungskörper in Umfangsrichtung zumindest teilweise, insbesondere vollständig und durchgehend, umgreift. Der Stützring dient zum einen dem Abstützen des Federelements und zum anderen dem Halten des Rastelements an dem Kupplungskörper beziehungsweise in der Rastelementaufnahme. Vorzugsweise ist der Stützring derart angeordnet, dass er die Rastelementaufnahme auf ihrer der Steckaufnahme abgewandten Seite übergreift und hierdurch verschließt. Entsprechend ist das Rastelement zuverlässig und verliersicher gehalten, insbesondere falls es zusätzlich den Hintergriffsbund aufweist, der in der ersten Stellung an dem Rastelementendanschlag anliegt.

Der Stützring ermöglicht zudem eine einfache Montage des Rastelement. Vorzugsweise wird der Stützring erst dann an dem Kupplungskörper angeordnet, wenn das Rastelement bereits in der Rastelementaufnahme vorliegt. Somit ist es möglich, zunächst das Rastelement in die Rastelementaufnahme einzulegen, anschließend das Federelement an ihm anzuordnen und erst nachfolgend den Stützring an dem Kupplungskörper anzuordnen, insbesondere an ihm zu befestigen. Der Stützring umgreift den Kupplungskörper in Umfangsrichtung zumindest teilweise. Insbesondere liegt er in Überdeckung mit der Rastelementaufnahme vor. Vorzugsweise umgreift er den Kupplungskörper jedoch vollständig und durchgehend, um zum einen das Rastelement zuverlässig zu halten und zum anderen eine Führung für die Schiebehülse bereitzustellen.

Eine Weiterbildung der Erfindung sieht vor, dass die Schiebehülse den Kupplungskörper in axialer Richtung zumindest teilweise übergreift und zur Lagerung mit einer Schiebehülseninnenumfangsfläche an einer Kupplungskörperaußenumfangsfläche des Kupplungskörpers anliegt. Die Schiebehülse greift insoweit nicht nur in die Steckaufnahme ein, sondern sie übergreift zusätzlich den Kupplungskörper außenseitig. Hierzu ist die Schiebehülse vorzugsweise im Längsschnitt gesehen U-förmig ausgestaltet, weist also zwei Schenkel auf, die beabstandet voneinander, insbesondere parallel beabstandet voneinander, verlaufen und über einen weiteren Schenkel miteinander verbunden sind. Einer der Schenkel greift zumindest zeitweise in die Steckaufnahme ein, während ein anderer der Schenkel außenseitig des Kupplungskörpers angeordnet ist und mit seiner Schiebehülseninnenumfangsfläche an der Kupplungskörperaußenumfangsfläche anliegt. Der weitere Schenkel ist stirnseitig des Kupplungskörpers angeordnet und verbindet die beiden Schenkel miteinander. Insbesondere liegt der eine Schenkel von innen und der andere Schenkel von außen an dem Kupplungskörper an, sodass die Schiebehülse in radialer Richtung festgesetzt ist. Hierdurch wird ein Verkippen der Schiebehülse vermieden und ein hoher Qualitätseindruck des Kupplungselements erzielt.

Eine Weiterbildung der Erfindung sieht vor, dass die Schiebehülse den Stützring in axialer Richtung gesehen übergreift und im Längsschnitt gesehen auf der dem wenigstens einen Rastelement gegenüberliegenden Seite des Stützrings einen Formschlussvorsprung aufweist, der in wenigstens einer Stellung der Schiebehülse mit dem Stützring zum Begrenzen einer Verlagerung der Schiebehülse in axialer Richtung zusammenwirkt. Vorzugsweise übergreift die Schiebehülse den Stützring derart, dass die bereits erwähnte Schiebehülseninnenumfangsfläche an dem Stützring anliegt, nämlich in radialer Richtung von außen. Bevorzugt liegt die Schiebehülseninnenumfangsfläche also sowohl an der Kupplungskörperaußenumfangsfläche als auch an dem Stützring an. Hierdurch wird ein besonders zuverlässiges Abstützen der Schiebehülse erzielt.

Die Schiebehülse weist den Formschlussvorsprung auf, der sich in radialer Richtung nach innen erstreckt, sodass er in der wenigstens einen Stellung an dem Stützring anliegt. Hierdurch wird ein Entfernen der Schiebehülse von dem Kupplungskörper verhindert. Vorzugsweise ist der Formschlussvorsprung reversibel an der Schiebehülse angeordnet, insbesondere liegt er in Form eines Sprengrings vor, der in eine Sprengringaufnahme der Schiebehülse eingebracht ist. Dies ermöglicht eine besonders einfache Montage des Kupplungselements, bei welcher nach dem Aufbringen des Stützrings auf den Kupplungskörper auch die Schiebehülse auf den Kupplungskörper aufgeschoben wird. Nachfolgend wird der Formschlussvorsprung an der Schiebehülse ausgebildet beziehungsweise der Springring in die Sprengringaufnahme eingebracht. Nachfolgend ist die Schiebehülse verliersicher an dem Kupplungskörper gehalten.

Eine Weiterbildung der Erfindung sieht vor, dass der Stützring mit dem Kupplungskörper in axialer Richtung verrastet ist. Hierzu verfügt der Stützring über eine Rasteinrichtung und der Kupplungskörper über eine Rastgegeneinrichtung. Beispielsweise liegt die Rasteinrichtung als Rastvorsprung und die Rastgegeneinrichtung als Rastausnehmung vor, in welche der Rastvorsprung eingreift. Auch die umgekehrte Ausgestaltung kann jedoch realisiert sein. Die Rasteinrichtung und die Rastgegeneinrichtung sind derart ausgestaltet, dass der Stützring in axialer Richtung auf den Kupplungskörper aufgeschoben werden kann und in einer bestimmten Stellung mit ihm verrastet, sodass der Stützring nachfolgend formschlüssig an dem Kupplungskörper gehalten ist und in axialer Richtung nicht mehr von ihm abgenommen werden kann.

Eine Weiterbildung der Erfindung sieht vor, dass Steckaufnahme in radialer Richtung nach außen von einer ersten Steckaufnahmeninnenumfangsfläche und einer benachbart zu der ersten Steckaufnahmeninnenumfangsfläche vorliegenden und gegenüber ihr mittels einer Stufung in radialer Richtung versetzten zweiten Steckaufnahmeninnenumfangsfläche begrenzt ist. Im Längsschnitt gesehen zumindest abschnittsweise ist die Steckaufnahme also bereichsweise von der ersten Steckaufnahmeninnenumfangsfläche und bereichsweise von der zweiten Steckaufnahmeninnenumfangsfläche begrenzt, nämlich in radialer Richtung nach außen. Die beiden Steckaufnahmeninnenumfangsflächen sind nebeneinander angeordnet und über die Stufung miteinander verbunden. Die Stufung kann derart ausgestaltet sein, dass die Steckaufnahmeninnenumfangsfläche in axialer Richtung gesehen unmittelbar aneinander angrenzen, beispielsweise durch eine senkrechte Ausgestaltung der Stufung, oder aber voneinander beabstandet vorliegen, beispielsweise aufgrund einer geneigten Ausgestaltung der Stufung. Die gestufte Steckaufnahme ermöglicht eine besonders kompakte Ausgestaltung des Kupplungselements.

Eine Weiterbildung der Erfindung sieht vor, dass die Schiebehülse in radialer Richtung von innen zur Lagerung an der zweiten Steckaufnahmeninnenumfangsfläche zumindest zeitweise anliegt. Dies wurde vorstehend bereits angedeutet. Da die Schiebehülse an der zweiten Steckaufnahmeninnenumfangsfläche anliegt, dient die Stufung beziehungsweise eine von der Stufung ausgebildete Steckaufnahmenringfläche als Endanschlag für die Schiebehülse, an welcher diese zumindest zeitweise anliegt, insbesondere mit einer Stirnseite. In axialer Richtung gesehen wird eine Verlagerung der Schiebehülse also einerseits durch das Anliegen der Schiebehülse an der Steckaufnahmenringfläche und andererseits durch das Anliegen des Formschlussvorsprungs an dem Stützring begrenzt, sodass die Schiebehülse in axialer Richtung innerhalb eines bestimmten Spiels zuverlässig festgelegt ist. Hierdurch ist sie verliersicher an dem Kupplungskörper gehalten.

Eine Weiterbildung der Erfindung sieht vor, dass das wenigstens eine Rastelement entlang der Verlagerungsachse in einer Rastelementaufnahme verlagerbar gelagert ist, wobei die Rastelementaufnahme zumindest eine der folgenden Flächen durchgreift: die erste Steckaufnahmeninnenumfangsfläche, eine durch die Stufung gebildete Steckaufnahmenringfläche und die zweite Steckaufnahmeninnenumfangsfläche. Auf die einzelnen Flächen wurde bereits hingewiesen. Die Steckaufnahmenringfläche verbindet die beiden Steckaufnahmeninnenumfangsflächen vorzugweise unmittelbar miteinander. Das bedeutet, dass sich an die Steckaufnahmenringfläche in axialer Richtung gesehen einerseits unmittelbar die erste Steckaufnahmeninnenumfangsfläche und andererseits unmittelbar die zweite Steckaufnahmeninnenumfangsfläche anschließt.

Die Steckaufnahmenringfläche kann grundsätzlich beliebig ausgestaltet sein, insbesondere ist sie durchgehend plan. Vorzugsweise steht sie senkrecht auf der Längsmittelachse beziehungsweise einer zu dieser parallelen Geraden. Sie kann als Endanschlag für die Schiebehülse dienen, wie bereits erläutert. Eine besonders kompakte Ausgestaltung des Kupplungselements wird erzielt, indem die Rastelementaufnahme, in welcher das Rastelement verlagerbar gelagert ist, zumindest eine der genannten Flächen durchgreift. Vorzugsweise durchgreift sie mehrere oder sogar alle der genannten Flächen, insbesondere also zumindest die erste Steckaufnahmeninnenumfangsfläche und die Steckaufnahmenringfläche oder die erste Steckaufnahmeninnenumfangsfläche, die Steckaufnahmenringfläche und die zweite Steckaufnahmeninnenumfangsfläche. Hierdurch werden Abmessungen des Kupplungselements in axialer Richtung reduziert.

Eine Weiterbildung der Erfindung sieht vor, dass die Steckaufnahmenringfläche einen Schiebehülsenendanschlag für die Schiebehülse bildet. Auf eine solche Ausgestaltung wurde bereits eingegangen. Die Verwendung der Steckaufnahmenringfläche als Schiebehülsenendanschlag ermöglicht zum einen den Verzicht auf ein separates Element zu diesem Zweck und zum anderen eine kompakte Ausgestaltung des Kupplungselements, insbesondere in radialer Richtung.

Die Erfindung betrifft weiterhin eine Fluidkupplung, mit einem Kupplungselement, insbesondere einem Kupplungselement gemäß den Ausführungen im Rahmen dieser Beschreibung, und mit einem Kupplungsgegenelement, wobei das Kupplungselement über Kopplungsmittel zum reversiblen Koppeln des Kupplungselements mit dem Kupplungsgegenelement der Fluidkupplung verfügt, wobei in einem Kupplungskörper des Kupplungselements eine Steckaufnahme ausgestaltet ist, in die das als Steckverbinder ausgestaltete Kupplungsgegenelement zur Herstellung einer Fluidverbindung einsteckbar ist, wobei die Kopplungsmittel mindestens ein Rastelement umfassen, das in einer ersten Stellung zum Hintergreifen eines Rastbunds des Kupplungsgegenelements in die Steckaufnahme hineinragt und in einer zweiten Stellung zum Freigeben des Rastbunds angeordnet ist. Dabei ist vorgesehen, dass eine Schiebehülse in axialer Richtung bezüglich einer Längsmittelachse der Steckaufnahme verlagerbar an dem Kupplungskörper gelagert ist, die dazu vorgesehen und ausgestaltet ist, bei einer axialen Verlagerung das wenigstens eine Rastelement in Richtung seiner zweiten Stellung zu drängen, wobei das wenigstens eine Rastelement in seiner ersten Stellung in radialer Richtung nach innen über die Schiebehülse übersteht.

Auf die Vorteile einer solchen Ausgestaltung der Fluidkupplung beziehungsweise des Kupplungselements wurde bereits hingewiesen. Sowohl die Fluidkupplung als auch das Kupplungselement können gemäß den Ausführungen im Rahmen dieser Beschreibung weitergebildet sein, sodass insoweit auf diese verwiesen wird.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

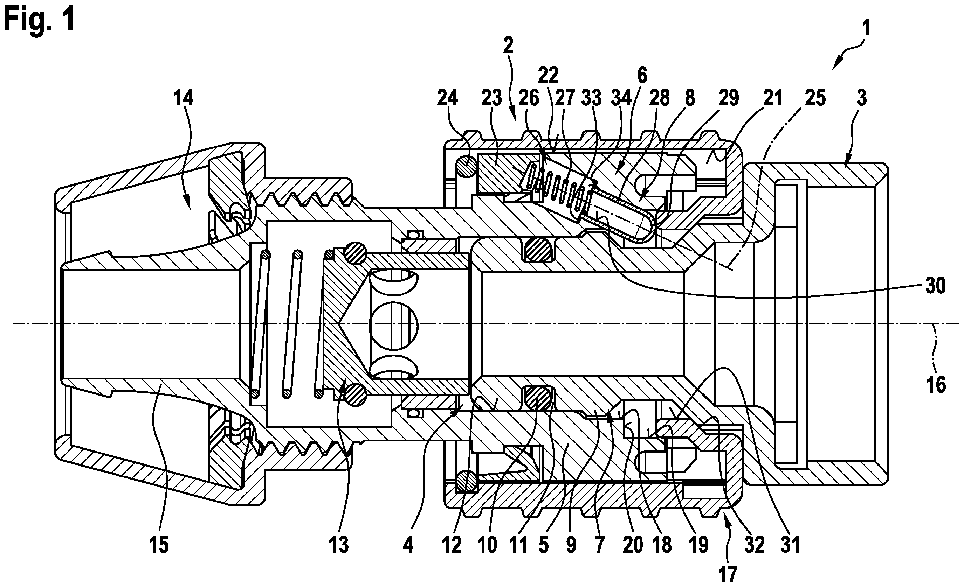

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur 1: eine schematische Längsschnittdarstellung einer Fluidkupplung mit einem Kupplungselement und einem Kupplungsgegenelement.

Die Figur 1 zeigt eine schematische Längsschnittdarstellung eine Fluidkupplung 1, die über ein Kupplungselement 2 sowie über ein Kupplungsgegenelement 3 verfügt. Das Kupplungselement 2 weist eine Steckaufnahme 4 auf, die in einem Kupplungskörper 5 des Kupplungselements 2 ausgestaltet ist. Das Kupplungsgegenelement 3 ist in die Steckaufnahme 4 einsteckbar und in der hier gezeigten Darstellung in die Steckaufnahme 4 eingesteckt. Es ist durch ein Zusammenwirken von Kopplungsmitteln 6 des Kupplungselements 2 und Kopplungsgegenmitteln 7 des Kupplungsgegenelements 3 in der Steckaufnahme 4 festgesetzt. Die Kopplungsmittel 6 umfassen wenigstens ein Rastelement 8, in dem hier dargestellten Ausführungsbeispiel mehrere Rastelemente 8, beispielsweise mindestens zwei Rastelemente 8, mindestens drei Rastelemente 8 oder mindestens vier Rastelemente 8. Die Rastelemente 8 sind in Umfangsrichtung gleichmäßig verteilt an dem Kupplungselement 2 angeordnet. Die Kopplungsgegenmittel 7 umfassen einen Rastbund 9, der in radialer Richtung nach außen von dem Kupplungsgegenelement 3 ausgeht, welches hier als Rohrleitungsende einer Rohrleitung vorliegt.

Zur Herstellung einer fluiddichten Fluidverbindungen zwischen dem Kupplungselement 2 und dem Kupplungsgegenelement 3 verfügt das Kupplungsgegenelement 3 zudem über einen Dichtring 10, der in einer Dichtringaufnahme 11 des Kupplungsgegenelements 3 angeordnet ist und einerseits dichtend an dem Kupplungsgegenelement 3 und andererseits dichtend an einer Steckaufnahmeninnenumfangsfläche 12 anliegt. Als weitere, hier nicht näher beschriebene Elemente verfügt das Kupplungselement 2 über eine Rückschlagventileinrichtung 13 sowie über eine Fluidkupplungseinrichtung 14, die über eine Schlauchtülle 15 zur Anbindung einer Schlauchleitung an das Kupplungselement 2 verfügt.

Die Kopplungsmittel 6 und die Kopplungsgegenmittel 7 sind zum reversiblen Koppeln des Kupplungselements 2 mit dem Kupplungsgegenelement 3 vorgesehen und ausgestaltet. Bei in der Steckaufnahme 4 angeordnetem Kupplungsgegenelement 3 hintergreifen die Rastelemente 8 den Rastbund 9, sodass dieser und mithin das Kupplungsgegenelement 3 in der Steckaufnahme 4 in axialer Richtung bezüglich einer Längsmittelachse 16 der Steckaufnahme 4 festgesetzt ist. Genauer gesagt Hintergreifen die Rastelemente 8 in einer ersten Stellung den Rastbund 9. In einer zweiten Stellung sind sie hingegen zum Freigeben des Rastbunds 9 angeordnet. Zum Verlagern der Rastelemente 8 in die zweite Stellung dient eine Schiebehülse 17, die in axialer Richtung bezüglich der Längsmittelachse 16 verlagerbar an dem Kupplungskörper 5 angeordnet ist.

Die Steckaufnahme 4 ist in axialer Richtung gesehen zumindest bereichsweise in radialer Richtung nach außen von einer ersten Steckaufnahmeninnenumfangsfläche 18 und einer zweiten Steckaufnahmeninnenumfangsfläche 19 begrenzt, die über eine Stufung 20 miteinander verbunden sind. Es ist erkennbar, dass die Schiebehülse 17 in radialer Richtung nach innen an der zweiten Steckaufnahmeninnenumfangsfläche 19 anliegt. Zugleich liegt sie in radialer Richtung nach außen mit einer Schiebehülseninnenumfangsfläche 21 an einer Kupplungskörperaußenumfangsfläche 22 an. Hierdurch ist sie in radialer Richtung bezüglich des Kupplungskörpers 5 festgesetzt und zuverlässig in axialer Richtung verlagerbar gelagert. Die Stufung 20 bildet zudem einen Endanschlag für die Schiebehülse 17, welche zumindest zeitweise mit einer Stirnseite der Schiebehülse 17 in Anlagekontakt tritt, um eine weitere Verlagerung der Schiebehülse 17 in axialer Richtung zu unterbinden.

Auf der Außenseite des Kupplungskörpers 5 übergreift die Schiebehülse 17 in axialer Richtung einen Stützring 23, welcher mit dem Kupplungskörper 5 verrastet ist. An der Schiebehülse 17 ist ein Formschlussvorsprung 24 ausgestaltet, welcher zumindest zeitweise mit dem Stützring 23 in Anlagekontakt tritt, um eine weitere Verlagerung der Schiebehülse 17 in axialer Richtung zu unterbinden. Der Stützring 23 und die Stufung 20 bilden insoweit in axialer Richtung gesehen auf gegenüberliegenden Seiten Endanschläge für die Schiebehülse 17, zwischen welchen diesen in axialer Richtung verlagerbar angeordnet ist.

Die Rastelemente 8 sind jeweils entlang einer Verlagerungsachse 25 verlagerbar gelagert. Hierzu sind sie jeweils in einer Rastelementaufnahme 26 des Kupplungskörpers 5 angeordnet. Die Verlagerungsachse 25 schneidet vorzugsweise die Längsmittelachse 16 und ist gegenüber dieser angewinkelt, schließt mit ihr also einen Winkel ein, welcher größer als 0° und kleiner als 180° ist. Die Rastelemente 8 sind zudem jeweils mittels eines Federelements 27 federkraftbeaufschlagt. Das Federelement 27 stützt sich hierbei in Richtung der Verlagerungsachse 25 gesehen einerseits an dem Rastelement 8 und andererseits an dem Stützring 23 ab, welcher hierzu bevorzugt eine Aussparung aufweist, in die das Federelement 27 endseitig eingreift. Das Federelement 27 ist in dem hier dargestellten Ausführungsbeispiel als Spiralfeder ausgestaltet. Das Rastelement 8 liegt als hohle Rasthülse vor und weist einen kreiszylindrischen Basisabschnitt 28 sowie einen teilkugelförmigen Endabschnitt 29 auf. Das Federelement 27 greift in das Rastelement 8 ein und stützt sich hierbei vorzugsweise sowohl in axialer Richtung als auch in radialer Richtung bezüglich der Verlagerungsachse 25 an einer Innenwand 30 des Rastelements 8 ab.

Vorzugsweise besteht der Kupplungskörper 5 aus Metall, insbesondere aus Messing. Der Stützring 23 ist bevorzugt aus Kunststoff hergestellt. Die Rastelemente 8 können ebenfalls aus Metall, bevorzugt aus Edelstahl sein. Für die Schiebehülse 17 kann grundsätzlich ein beliebiges Material verwendet werden, besonders bevorzugt kommt ebenfalls Metall zum Einsatz, beispielsweise Stahl, Aluminium oder dergleichen.

Es ist erkennbar, dass die Rastelement 8 in der hier gezeigten ersten Stellung in radialer Richtung nach innen über die Schiebehülse 17 überstehen. Hierdurch wird zum einen das zuverlässige Festsetzen des Kupplungsgegenelements 3 in der Steckaufnahme 4 sichergestellt und zum anderen eine einfache Handhabung der Fluidkupplung 1 ermöglicht. Besonders bevorzugt ist es vorgesehen, dass eine die Schiebehülse 17 in radialer Richtung nach innen begrenzende Schiebehülseninnenwand 31 mit der ersten Steckaufnahmeninnenumfangsfläche 18 fluchtet oder in radialer Richtung weiter außen liegt als diese. Hierdurch wird ein einfaches Einbringen des Kupplungsgegenelements 3 mit seinem Rastbunds 9 in die Steckaufnahme 4 erzielt. Weiter ist an der Schiebehülse 17 bevorzugt eine Einlaufschräge 32 ausgestaltet, welche sich ausgehend von der Schiebehülseninnenwand 31 in radialer Richtung schräg nach außen erstreckt. Dies erleichtert das Einbringen des Kupplungsgegenelements 3 beziehungsweise seines Rastbunds 9 in die Steckaufnahme 4.

Die beschriebene Ausgestaltung der Fluidkupplung 1 und insbesondere des Kupplungselements 2 zeichnen sich durch eine kompakte Ausgestaltung aus, welche zudem einen hohen Bedienkomfort sicherstellt. Insbesondere ist mithilfe der Rastelement ein selbsthemmendes Festsetzen des Kupplungsgegenelements 3 in der Steckaufnahme 4 sichergestellt. Auch sind die Rastelemente 8 selbst verliersicher angeordnet beziehungsweise ausgestaltet. Das Rastelement 8 verfügt hierzu über einen Hintergriffsbund 33, der in radialer Richtung bezüglich der Verlagerungsachse 25 hervorsteht und als Ringkragen ausgestaltet ist. Der Hintergriffsbund 33 begrenzt zusammen mit einem Rastelementendanschlag 34 eine Verlagerung des Rastelements 8 in axialer Richtung entlang der Verlagerungsachse 25. Weiterhin lässt sich das Kupplungselement 2 einfach montieren, sodass es insgesamt kostengünstig herstellbar ist.

### BEZUGSZEICHENLISTE

- 1: Fluidkupplung
- 2: Kupplungselement
- 3: Kupplungsgegenelement
- 4: Steckaufnahme
- 5: Kupplungskörper
- 6: Kopplungsmittel
- 7: Kopplungsgegenmittel
- 8: Rastelement
- 9: Rastbund
- 10: Dichtring
- 11: Dichtringaufnahme
- 12: Steckaufnahmeninnenumfangsfläche
- 13: Rückschlagventileinrichtung
- 14: Fluidkupplungseinrichtung
- 15: Schlauchtülle
- 16: Längsmittelachse
- 17: Schiebehülse
- 18: 1. Steckaufnahmeninnenumfangsfläche
- 19: 2. Steckaufnahmeninnenumfangsfläche
- 20: Stufung
- 21: Schiebehülseninnenumfangsfläche
- 22: Kupplungskörperaußenumfangsfläche
- 23: Stützring
- 24: Formschlussvorsprung
- 25: Verlagerungsachse
- 26: Rastelementaufnahme
- 27: Federelement
- 28: Basisabschnitt
- 29: Endabschnitt
- 30: Innenwand
- 31: Schiebehülseninnenwand
- 32: Einlaufschräge
- 33: Hintergriffsbund
- 34: Rastelementendanschlag

## Patentansprüche

1. Kupplungselement (2) für eine Fluidkupplung (1), mit Kopplungsmitteln (6) zum reversiblen Koppeln des Kupplungselements (2) mit einem Kupplungsgegenelement (3) der Fluidkupplung (1), wobei in einem Kupplungskörper (5) des Kupplungselements (2) eine Steckaufnahme (4) ausgestaltet ist, in die das als Steckverbinder ausgestaltete Kupplungsgegenelement (3) zur Herstellung einer Fluidverbindung einsteckbar ist, wobei die Kopplungsmittel (6) wenigstens ein Rastelement (8) umfassen, das in einer ersten Stellung zum Hintergreifen eines Rastbunds (9) des Kupplungsgegenelements (3) in die Steckaufnahme (4) hineinragt und in einer zweiten Stellung zum Freigeben des Rastbunds (9) angeordnet ist, **dadurch gekennzeichnet, dass** eine Schiebehülse (17) in axialer Richtung bezüglich einer Längsmittelachse (16) der Steckaufnahme (4) verlagerbar an dem Kupplungskörper (5) gelagert ist, die dazu vorgesehen und ausgestaltet ist, bei einer axialen Verlagerung das wenigstens eine Rastelement (8) in Richtung seiner zweiten Stellung zu drängen, wobei das wenigstens eine Rastelement (8) in seiner ersten Stellung in radialer Richtung nach innen über die Schiebehülse (17) übersteht.

2. Kupplungselement nach Anspruch 1, **dadurch gekennzeichnet, dass** das wenigstens eine Rastelement (8) entlang einer gegenüber einer eine Längsmittelachse (16) der Steckaufnahme (4) aufnehmenden gedachten Ebene angewinkelten Verlagerungsachse (25) zwischen der ersten Stellung und der zweiten Stellung verlagerbar ist.

3. Kupplungselement nach einem der vorhergehenden Ansprüche, **dadurch gekennzeichnet, dass** das wenigstens eine Rastelement (8) in Richtung seiner ersten Stellung mittels eines Federelements (27) federkraftbeaufschlagt ist.

4. Kupplungselement nach einem der vorhergehenden Ansprüche, **dadurch gekennzeichnet, dass** das wenigstens eine Rastelement (8) auf seiner der Steckaufnahme (4) abgewandten Seite einen Hintergriffsbund (33) aufweist, der in der ersten Stellung an einem Rastelementendanschlag (34) anliegt.

5. Kupplungselement nach einem der vorhergehenden Ansprüche, **dadurch gekennzeichnet, dass** das wenigstens eine Rastelement (8) hohl ist und das Federelement (27) in das wenigstens eine Rastelement (8) eingreift und sich an einer Innenwand des wenigstens einen Rastelements (8) ab stützt.

6. Kupplungselement nach einem der vorhergehenden Ansprüche, **dadurch gekennzeichnet, dass** das wenigstens eine Rastelement (8) als Rasthülse ausgestaltet ist und einen kreiszylindrischen Basisabschnitt (28) sowie einen teilkugelförmigen Endabschnitt (29) aufweist.

7. Kupplungselement nach einem der vorhergehenden Ansprüche, **dadurch gekennzeichnet, dass** sich das Federelement (27) auf seiner dem wenigstens einen Rastelement (8) abgewandten Seite an einem Stützring (23) abstützt, der den Kupplungskörper (5) in Umfangsrichtung zumindest teilweise umgreift.

8. Kupplungselement nach einem der vorhergehenden Ansprüche, **dadurch gekennzeichnet, dass** die Schiebehülse (17) den Kupplungskörper (5) in axialer Richtung zumindest teilweise übergreift und zur Lagerung mit einer Schiebehülseninnenumfangsfläche (21) an einer Kupplungskörperaußenumfangsfläche (22) des Kupplungskörpers (5) anliegt.

9. Kupplungselement nach einem der vorhergehenden Ansprüche, **dadurch gekennzeichnet, dass** die Schiebehülse (17) den Stützring (23) in axialer Richtung gesehen übergreift und im Längsschnitt gesehen auf der dem wenigstens einen Rastelement (8) gegenüberliegenden Seite des Stützrings (23) einen Formschlussvorsprung (24) aufweist, der in wenigstens einer Stellung der Schiebehülse (17) mit dem Stützring (23) zum Begrenzen einer Verlagerung der Schiebehülse (17) in axialer Richtung zusammenwirkt.

10. Kupplungselement nach einem der vorhergehenden Ansprüche, **dadurch gekennzeichnet, dass** der Stützring (23) mit dem Kupplungskörper (5) in axialer Richtung verrastet ist.

11. Kupplungselement nach einem der vorhergehenden Ansprüche, **dadurch gekennzeichnet, dass** die Steckaufnahme (4) in radialer Richtung nach außen von einer ersten Steckaufnahmeninnenumfangsfläche (18) und einer benachbart zu der ersten Steckaufnahmeninnenumfangsfläche (18) vorliegenden und gegenüber ihr mittels einer Stufung (20) in radialer Richtung versetzten zweiten Steckaufnahmeninnenumfangsfläche (19) begrenzt ist.

12. Kupplungselement nach einem der vorhergehenden Ansprüche, **dadurch gekennzeichnet, dass** die Schiebehülse (17) in radialer Richtung von innen zur Lagerung an der zweiten Steckaufnahmeninnenumfangsfläche (19) zumindest zeitweise anliegt.

13. Kupplungselement nach einem der vorhergehenden Ansprüche, **dadurch gekennzeichnet, dass** das wenigstens eine Rastelement (8) entlang der Verlagerungsachse (25) in einer Rastelementaufnahme (26) verlagerbar gelagert ist, wobei die Rastelementaufnahme (26) zumindest eine der folgenden Flächen durchgreift: die erste Steckaufnahmeninnenumfangsfläche (18), eine durch die Stufung (20) gebildete Steckaufnahmenringfläche und die zweite Steckaufnahmeninnenumfangsfläche (19).

14. Kupplungselement nach einem der vorhergehenden Ansprüche, **dadurch gekennzeichnet, dass** die Steckaufnahmenringfläche einen Schiebehülsenendanschlag für die Schiebehülse (17) bildet.

15. Fluidkupplung (1), mit einem Kupplungselement (2), insbesondere einem Kupplungselement (2) nach einem oder mehreren der vorhergehenden Ansprüche, und mit einem Kupplungsgegenelement (3), wobei das Kupplungselement (2) über Kopplungsmittel (6) zum reversiblen Koppeln des Kupplungselements (2) mit dem Kupplungsgegenelement (3) der Fluidkupplung (1) verfügt, wobei in einem Kupplungskörper (5) des Kupplungselements (2) eine Steckaufnahme (4) ausgebildet ist, in die das als Steckverbinder ausgestaltete Kupplungsgegenelement (3) zur Herstellung einer Fluidverbindung einsteckbar ist, wobei die Kopplungsmittel (6) wenigstens ein Rastelement (8) umfassen, das in einer ersten Stellung zum Hintergreifen eines Rastbunds (9) des Kupplungsgegenelements (3) in die Steckaufnahme (4) hineinragt und in einer zweiten Stellung zum Freigeben des Rastbunds (9) angeordnet ist, **dadurch gekennzeichnet, dass** eine Schiebehülse (17) in axialer Richtung bezüglich einer Längsmittelachse (16) der Steckaufnahme (4) verlagerbar an dem Kupplungskörper (5) gelagert ist, die dazu vorgesehen und ausgestaltet ist, bei einer axialen Verlagerung das wenigstens eine Rastelement (8) in Richtung seiner zweiten Stellung zu drängen, wobei das wenigstens eine Rastelement (8) in seiner ersten Stellung in radialer Richtung nach innen über die Schiebehülse (17) übersteht.
